# EUROPEAN PATENT APPLICATION

(11) **EP 4 826 035 A1**
(43) Date of publication of application: **21.10.2026**
(21) Application number: 24904462.9
(22) Date of filing: 16.12.2024
(51) Int. Cl.: C22C 38/02, C22C 38/06, C22C 38/04, C22C 38/14, C22C 38/60, C22C 38/00, C22C 38/58, C22C 38/52, C22C 38/50, C22C 38/12

(54) **NON-ORIENTED ELECTRICAL STEEL SHEET, MOTOR CORE, AND METHOD FOR MANUFACTURING SAME**

(30) Priority: 15.12.2023 KR 20230183839
(71) Applicant: POSCO Co., Ltd, Gyeongsangbuk-do 37859 (KR)
(72) Inventor: PARK, Junesoo, Pohang-si, Gyeongsangbuk-do 37859 (KR); SONG, Daehyun, Pohang-si, Gyeongsangbuk-do 37859 (KR); CHUNG, Tae In, Pohang-si, Gyeongsangbuk-do 37859 (KR); PAK, Junhak, Pohang-si, Gyeongsangbuk-do 37859 (KR)
(74) Representative: Meissner Bolte Partnerschaft mbB
(86) International application number: PCT/KR2024/097008
(87) International publication number: WO 2025/127899

(57) **Abstract**

A non-oriented electrical steel sheet according to an embodiment of the present invention includes, in wt%, Si: 3.2 to 4.5%, Al: 1.2 to 2.5%, and Mn: 0.1 to 2.5%, with the balance being Fe and unavoidable impurities, where Equation 1 below is satisfied, [Equation 1] 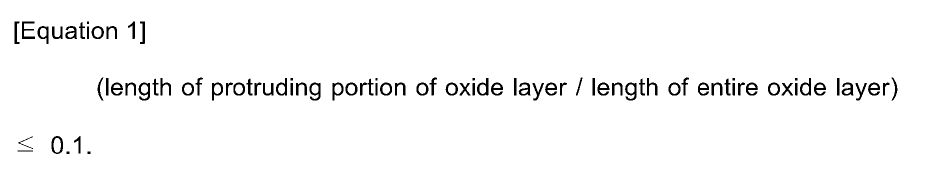 (length of protruding portion of oxide layer / length of entire oxide layer) ≤ 0.1.

## Description

### BACKGROUND OF THE INVENTION

### (a) Field of the Invention

An embodiment of the present invention relates to a non-oriented electrical steel sheet, a motor core and a method for manufacturing the same. Specifically, an embodiment of the present invention relates to a non-oriented electrical steel sheet, a motor core, and a method of manufacturing the same, capable of appropriately adjusting the conditions to form an appropriate oxide layer and to improve the magnetism at the same time, during cold rolling.

### (b) Description of the Related Art

A non-oriented electrical steel sheet is mainly used in a motor that converts electrical energy to mechanical energy, and an excellent magnetic characteristic of the non-oriented electrical steel sheet is required to achieve high efficiency while the motor converts the electrical energy to the mechanical energy. In particular, recently, as environmentally-friendly vehicles driven by motors instead of internal combustion engines have been gaining attention, the demand for non-oriented electrical steel sheets used as driving motor core materials is increasing, and for this purpose, non-oriented electrical steel sheets with excellent magnetic properties and strength are required.

The magnetic properties of non-oriented electrical steel sheets are mainly evaluated by iron loss and magnetic flux density. The iron loss means energy loss occurring at a specific magnetic flux density and frequency, and the magnetic flux density means a degree of magnetization obtained in a specific magnetic field. Lower iron loss allows for more energy-efficient motors to be manufactured under the same conditions, and higher magnetic flux density allows for smaller motors or reduced copper loss. Therefore, by using non-oriented electrical steel sheets with low iron loss and high magnetic flux density, a driving motor with excellent efficiency and torque may be manufactured, thereby improving the driving range and output of environmentally-friendly vehicles.

Depending on operational conditions of the motor, the characteristics of the non-oriented electrical steel sheet that should be considered is also varied. The general standard for evaluating the characteristics of non-oriented electrical steel sheets used in motors is widely used as W15/50, which is the iron loss when a 1.5T magnetic field is applied at a commercial frequency of 50Hz. However, in the case of non-oriented electrical steel sheets with a thickness of 0.35 mm or less used in environmentally-friendly vehicle driving motors, magnetic properties are often important at low magnetic fields of 1.0 T or less and high frequencies of 400 Hz or higher, so the properties of non-oriented electrical steel sheets are often evaluated using the W_{10/400} iron loss. In addition, due to the increase in rotation speed, strength characteristics that were not previously considered important are now being evaluated as important characteristics.

Therefore, reflecting the recent energy efficiency enhancement policies and the utilization trends of non-oriented electrical steel sheets, the development technology of non-oriented electrical steel sheets with low high-frequency core loss, high magnetic flux density, and excellent strength may be considered essential.

Among the important magnetic characteristics of the non-oriented electrical steel sheet, a most basic and efficient method for lowering iron loss is to increase the amount of Si, Al, and Mn, which are elements with high resistivity, or to reduce a thickness of the steel sheet. Increasing the amount of Si, Al, and Mn added increases the resistivity of the steel, which reduces the eddy current loss among the iron losses of non-oriented electrical steel sheets, thereby reducing the iron loss, and in the case of high-frequency iron loss, the ratio of eddy current loss among the iron losses is greater, so it may be a very effective method for reducing high-frequency iron loss. However, the effect varies depending on the additive ratio, and since the magnetic flux density deteriorates as the amount of alloying elements added increases, the appropriate additive ratio and the additive ratio between the Si, Al, and Mn additions must be appropriately controlled to secure excellent iron loss and magnetic flux density. The method of making the thickness thin is also a method that greatly reduces eddy current loss, and is very effective in reducing iron loss, but thin steel sheets have the disadvantage of poor productivity and workability.

As a method to improve the magnetic flux density while lowering the iron loss of the non-oriented electrical steel sheet, technologies for improving magnetic properties by improving texture by using special additive elements such as REM or for introducing additional manufacturing processes such as warm rolling, rolling twice, and annealing twice have been reported. However, all of these technologies cause an increase in manufacturing cost or have difficulties in mass production, so it is necessary to develop a technology that produces excellent magnetic properties and is easy to produce commercially. In addition, technologies for suppressing and controlling formation of inclusions by significantly suppressing an amount of impurities added and adding and element such as Ca are being developed, but these technologies also cause an increase in manufacturing cost, and it is difficult to clearly secure effects thereof.

### SUMMARY OF THE INVENTION

### [Technical Problem]

An embodiment of the present invention provides a non-oriented electrical steel sheet, a motor core, and a method of manufacturing the same. Specifically, an embodiment of the present invention provides a non-oriented electrical steel sheet, a motor core, and a method of manufacturing the same, capable of appropriately adjusting the conditions to form an appropriate oxide layer to improve the magnetism during cold rolling.

### [Technical Solution]

A non-oriented electrical steel sheet according to an embodiment of the present invention may include, in wt%, Si: 3.2 to 4.5%, Al: 1.2 to 2.5%, and Mn: 0.1 to 2.5%, with the balance being Fe and unavoidable impurities, where Equation 1 below is satisfied, [Equation 1] 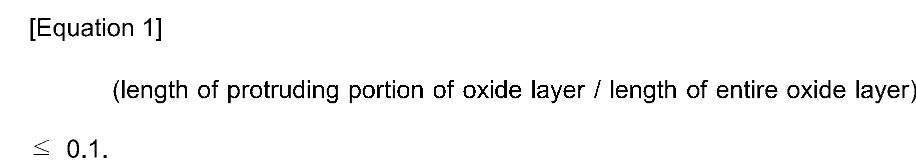 (length of protruding portion of oxide layer / length of entire oxide layer) ≤ 0.1.

A non-oriented electrical steel sheet according to an embodiment of the present invention may satisfy Equation 2 below, [Equation 2] $\left(area of internal oxide/area of entire oxide layer\right) \leq 0.05 ,$

Where, in Equation 2, the area of the internal oxide means a sum of areas of oxides existing in a steel sheet base material.

A non-oriented electrical steel sheet according to an embodiment of the present invention may include Mn: 0.7 to 2.5 wt%.

A non-oriented electrical steel sheet according to an embodiment of the present invention may further include at least one of P:0.1 wt% or less (excluding 0%), C:0.005 wt% or less (excluding 0%), S:0.005 wt% or less (excluding 0%), Ti:0.005 wt% or less (excluding 0%), and N:0.005 wt% or less (excluding 0%).

A non-oriented electrical steel sheet according to an embodiment of the present invention may further include 0.005 to 0.200 wt% of each or a combined amount of one or more of Sn, Sb, Bi, Pb, Ge, and As.

A non-oriented electrical steel sheet according to an embodiment of the present invention may further include at least one of Cu: 0.005 to 0.2 wt%, Cr: 0.01 to 0.5 wt%, Ni:0.005 to 0.1 wt%, Zn:0.01 wt% or less (excluding 0%), and Co: 0.05 wt% or less (excluding 0%).

A non-oriented electrical steel sheet according to an embodiment of the present invention may further include at least one of Mo: 0.001 to 0.1 wt%, B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

A non-oriented electrical steel sheet according to an embodiment of the present invention may have an average grain diameter of 50 to 150 µm, and a yield strength of 480 MPa or more.

A non-oriented electrical steel sheet according to an embodiment of the present invention may have an iron loss (W10/400) of 12.0 W/Kg or less, and a magnetic flux density (B50) of 1.60T or more.

A motor core according to an embodiment of the present invention may be one in which a plurality of non-oriented electrical steel sheets each including, in wt%, Si: 3.2 to 4.5%, Al: 1.2 to 2.5%, and Mn: 0.1 to 2.5%, with the balance being Fe and unavoidable impurities, and satisfying Equation 1 below, are stacked, [Equation 1] 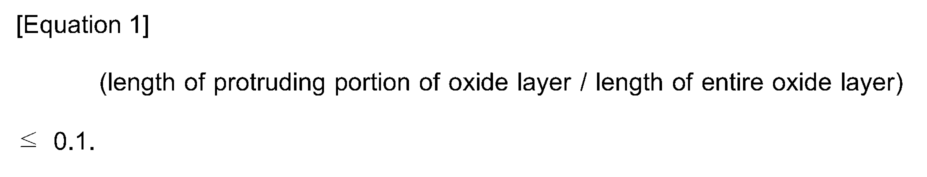 (length of protruding portion of oxide layer / length of entire oxide layer) ≤ 0.1.

A method of manufacturing a non-oriented electrical steel sheet according to an embodiment of the present invention may include manufacturing a hot-rolled steel sheet by hot-rolling a slab including, in wt%, Si: 3.2 to 4.5%, Al: 1.2 to 2.5%, and Mn: 0.1 to 2.5%, with the balance being Fe and unavoidable impurities, manufacturing a cold-rolled sheet by cold-rolling the hot-rolled steel sheet, and cold-rolled sheet annealing for annealing the cold-rolled sheet, where the manufacturing of the cold-rolled sheet may include two or more passes, and where a strain rate (έ1) in a first pass is 200/s or less, and a sum (έ1+έ2) of strain rates in the first pass and a second pass is 1100/s or less.

In the manufacture of the cold-rolled sheet, a ratio of a strain rate (έmax) of a pass having a highest strain rate with respect to a strain rate (έtotal) of an entire process may be 0.3 or less.

The slab may further include at least one of P:0.1 wt% or less (excluding 0%), C:0.005 wt% or less (excluding 0%), S:0.005 wt% or less (excluding 0%), Ti:0.005 wt% or less (excluding 0%), N:0.005 wt% or less (excluding 0%).

The slab may further include 0.005 to 0.200 wt% of each or a combined amount of one or more of Sn, Sb, Bi, Pb, Ge, and As.

The slab may further include at least one of Cu: 0.005 to 0.2 wt%, Cr: 0.01 to 0.5 wt%, Ni: 0.005 to 0.1 wt%, Zn:0.01 wt% or less (excluding 0%) and Co: 0.05 wt% or less (excluding 0%).

The slab may further include at least one of Mo: 0.001 to 0.1 wt%, B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

A method of manufacturing a motor core according to an embodiment of the present invention may include stress-relieving annealing the above-mentioned non-oriented electrical steel sheet, where Equation 3 or Equation 4 below are satisfied in the stress-relieving annealing, [Equation 3] $6 \leq \left[O\right] \times \left[Al\right] \leq 240 ,$ [Equation 4] $480 \leq \left[O\right] \times \left[Al\right] \leq 2400 ,$ where, in Equation 3 and Equation 4, [O] represents the content (ppm) of O in the atmosphere in the stress-relieving annealing, and [Al] represents the content (wt%) of Al within non-oriented electrical steel sheet.

The stress-relieving annealing may perform soaking at a temperature of 700 to 850 °C for 1 hour or more.

The motor core according to an embodiment of the present invention may include, in wt%, Si: 3.2 to 4.5%, Al: 1.2 to 2.5%, and Mn: 0.1 to 2.5%, with the balance being Fe and unavoidable impurities, where a surface of each sheet forming a motor core satisfies Equation 1 below, and a side surface of each sheet satisfies Equation 5 below, [Equation 1] 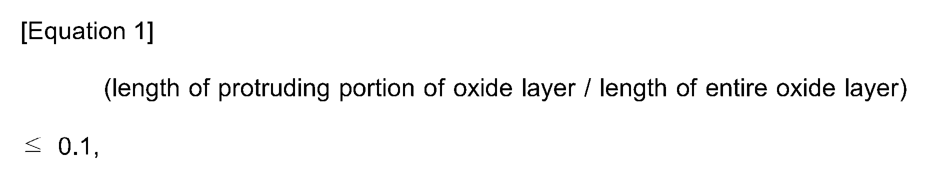 (length of protruding portion of oxide layer / length of entire oxide layer) ≤ 0.1, [Equation 5] 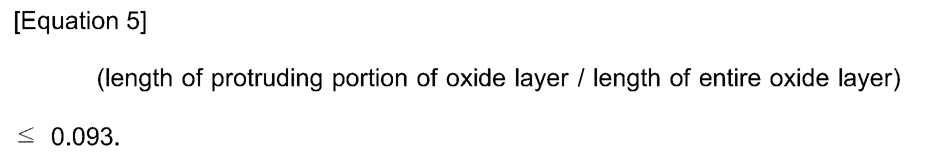 (length of protruding portion of oxide layer / length of entire oxide layer) ≤ 0.093.

The surface of each sheet forming the motor core may satisfy Equation 2 below, and the side surface of each sheet may satisfy Equation 6 below, [Equation 2] $\left(area of internal oxide/area of entire oxide layer\right) \leq 0.05 ,$ [Equation 6] $\left(area of internal oxide/area of entire oxide layer\right) \leq 0.047 ,$

Where, in Equation 2 and Equation 5, the area of the internal oxide means a sum of areas of oxides existing in a steel sheet base material.

### [Advantageous Effects]

The non-oriented electrical steel sheet according to the embodiment of the present invention has excellent magnetic flux density, iron loss, and yield strength simultaneously because the grain size is appropriately formed.

Ultimately, the non-oriented electrical steel sheet according to the embodiment of the present invention contributes to the manufacture of ecofriendly vehicle motors, high-efficiency home appliance motors, and super premium-grade electric motors.

### BRIEF DESCRIPTION OF THE DRAWINGS

FIG. 1 and FIG. 2 are schematic views of a cross-section including a thickness direction of a non-oriented electrical steel sheet according to an embodiment of the present invention.
FIG. 3 is a schematic view of a cross-section of a motor core according to an embodiment of the present invention.
FIG. 4 and FIG. 5 are schematic views of a cross-section including a thickness direction of a non-oriented electrical steel sheet according to an embodiment of the present invention.

### DETAILED DESCRIPTION OF THE EMBODIMENTS

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise stated, % means wt%, and 1 ppm is 0.0001 wt%.

In embodiments of the present invention, inclusion of an additional element means replacing the remaining iron (Fe) by an additional amount of the additional elements.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

A non-oriented electrical steel sheet according to an embodiment of the present invention may include Si: 3.2 to 4.5%, Al: 1.2 to 2.5%, and Mn: 0.1 to 2.5%, in wt%, with the balance being Fe and unavoidable impurities.

Hereinafter, the reason for limiting the components of the non-oriented electrical steel sheet will be described.

### Si: 3.20 to 4.50 wt%

Silicon (Si) serves to increase the resistivity of material to lower iron loss and increase the strength by solid solution strengthening may. When too little Si is added, an effect of improving iron loss and strength may insufficient. When too much Si is added, the magnetic flux density decreases significantly, and the rollability may be deteriorated due to an increase of brittleness. Therefore, Si may be included in an amount of 3.20 to 4.5 wt%. More specifically, it may be included in an amount of 3.30 to 4.30 wt%. More specifically, it may be included in an amount of 3.50 to 4.20 wt%.

### Al: 1.20 to 2.50 wt%

Aluminum (Al) serves to increase the resistivity of material to lower iron loss and improve rollability, decrease magnetic anisotropy to decrease magnetism deviation in a rolling direction and a direction vertical to the rolling direction. When too little Al is added, it is difficult to obtain the effect of reducing the high-frequency iron loss. When too much Al is added, nitride may be excessively formed, to deteriorate magnetism. Therefore, Al may be included in an amount of 1.20 to 2.50 wt%. More specifically, it may be included in an amount of 1.30 to 2.40 wt%. More specifically, it may be included in an amount of 1.40 to 2.30 wt%.

### Mn: 0.10 to 2.50 wt%

Manganese (Mn) serves to improve iron loss by increasing resistivity of the material and improve the texture. When too little Mn is added, fine sulfides may be formed so that magnetic degradation is caused, and when too much Mn is added, it can have a negative effect on the magnetic flux density. Therefore, Mn may be included in an amount of 0.10 to 2.50 wt%. More specifically, it may be included in an amount of 0.30 to 2.50 wt%. More specifically, it may be included in an amount of 0.70 to 2.50 wt%. More specifically, it may be included in an amount of 0.70 to 2.30 wt%. More specifically, it may be included in an amount of 0.70 to 2.20 wt%.

In the embodiment of the present invention, the resistivity of the non-oriented electrical steel sheet at 25 °C may be 63.0 µΩ·cm or more. The iron loss of the non-oriented electrical steel sheet is divided into a hysteresis loss and an eddy current loss, and if the resistivity of the steel increases by adding elements such as Si, Al, and Mn, the eddy current loss may be significantly reduced. In particular, as the frequency increases, the proportion of the total iron loss occupied by the eddy current loss increases, so in order to obtain excellent high-frequency iron loss, it is necessary to control the resistivity of the steel to a certain level or higher, and through the present invention, when the resistivity (ρ) of the steel is 63 µΩcm or higher, excellent characteristics may be secured. More specifically, the resistivity (ρ) may be 70.0 to 90.0 µΩ·cm.

In an embodiment of the present invention, resistivity can be measured by a conventional resistivity measuring instrument such as the 4-point method.

A non-oriented electrical steel sheet according to an embodiment of the present invention may further include the at least one of P:0.1 wt% or less (excluding 0%), C:0.005 wt% or less (excluding 0%), S:0.005 wt% or less (excluding 0%), Ti:0.005 wt% or less (excluding 0%), N:0.005 wt% or less (excluding 0%).

### P: 0.100 wt% or less

Phosphorus (P) is a grain boundary and surface segregation element, and has an effect of improving texture of steel. However, if too much P is added, it may lower iron loss by inhibiting grain growth and lower rollability due to grain boundary segregation, which may also lower productivity. More specifically, P may be included in an amount of 0.0001 to 0.0500 wt%. More specifically, P may be included in an amount of 0.0010 to 0.0200 wt%.

### C: 0.0050 wt% or less

Carbon (C) may cause magnetic aging and combine with other impurity elements to form carbides, which may impede grain boundary or domain wall movement and deteriorate magnetic properties. More specifically, C may be included in an amount of 0.0005 to 0.0045 wt%.

### S: 0.0050 wt% or less

Sulfur (S) may form fine precipitates, MnS and CuS, which may worsen magnetic properties and hot workability. More specifically, S may be included in an amount of 0.0005 to 0.0045 wt%.

### Ti: 0.0050 wt% or less

Titanium (Ti) has a strong tendency to form precipitates inside the steel, and may deteriorate the iron loss by forming fine carbides, nitrides, or sulfides inside the base material, thereby suppressing grain growth and domain wall movement. More specifically, Ti may be included in an amount of 0.0005 to 0.0035 wt%.

### N: 0.0050 wt% or less

Nitrogen (N) not only forms fine AlN precipitates inside the base material, but also combines with other impurities to form fine precipitates, which may suppress grain growth and domain wall movement, thereby worsening iron loss. More specifically, N may be included in an amount of 0.0005 to 0.0045 wt%.

A non-oriented electrical steel sheet according to an embodiment of the present invention may further include 0.005 to 0.200 wt% of each or a combined amount of one or more of Sn, Sb, Bi, Pb, Ge, and As.

### Sn

Tin (Sn) segregates at grain boundaries and surfaces, to serve to improve the texture of materials and suppress surface oxidation, and may be added in order to improve magnetism. When too much Sn is added, grain boundary segregation is severe, the surface quality is deteriorated, hardness is increased, and the cold-rolled sheet is broken, thereby reducing rollability. Specifically, Sn may be further included in an amount of 0.005 to 0.200 wt%. More specifically, it may be further included in an amount of 0.010 to 0.150 wt%.

### Sb

Antimony (Sb) segregates at grain boundaries and surfaces, to serve to improve the texture of materials and suppress surface oxidation, and may be additionally added in order to improve magnetism. When too much Sb is added, grain boundary segregation is severe, the surface quality is deteriorated, hardness is increased, and the cold-rolled sheet is broken, thereby reducing rollability. Specifically, Sb may be further included in an amount of 0.005 to 0.200 wt%. More specifically, it may be further included in an amount of 0.010 to 0.150 wt%.

### Bi, Pb, Ge, and As

When additionally added, bismuth (Bi), lead (Pb), germanium (Ge), and arsenic (As) segregate at grain boundaries, thereby alleviating stress concentration at grain boundaries during cold rolling, thereby suppressing recrystallization of <111>//ND orientation grains in the subsequent recrystallization annealing process, thereby improving magnetic flux density. If these are added appropriately, the aforementioned effects may be additionally obtained, but if they are included in too much, a large amount of segregation may occur, inhibiting grain growth and resulting in lower magnetic flux density and iron loss.

A non-oriented electrical steel sheet according to an embodiment of the present invention may further include the at least one of Cu: 0.005 to 0.2 wt%, Cr: 0.01 to 0.5 wt%, Ni:0.005 to 0.1 wt%, Zn:0.01 wt% or less (excluding 0%) and Co: 0.05 wt% or less (excluding 0%).

### Cu: 0.005 to 0.200 wt%

Copper (Cu) serves to form sulfides together with Mn. When more Cu is added, when too little Cu is added, (Cu · Mn)S may be finely precipitated, which may deteriorate the magnetism. When too much Cu is added, high-temperature embrittlement may occur, which may cause cracks to form during casting or hot rolling. More specifically, Cu may be included in an amount of 0.01 to 0.10 wt%.

### Cr: 0.01 to 0.50 wt%

Chromium (Cr) serves to improve iron loss by increasing resistivity. When too little Cr is added, the effect of increasing resistivity may not be sufficient. When too much Cr is included, magnetic flux density may deteriorate. More specifically, Cr may be included in an amount of 0.050 to 0.20 wt%.

### Ni: 0.005 to 0.100 wt%

Nickel (Ni) can react with impurity elements to form fine sulfides, carbides, and nitrides, which can have a detrimental effect on magnetism. More specifically, Ni may be included in an amount of 0.001 to 0.050 wt%.

### Zn: 0.01 wt% or less

When zinc (Zn) is excessively contained, it may deteriorate magnetism by acting as an impurity. Therefore, Zn may be further added, within a range described above. More specifically, Zr may be included in an amount of 0.001 to 0.005 wt%.

### Co: 0.05 wt% or less

Cobalt (Co), while not forming fine precipitates that degrade the magnetism of the steel sheet, may increase high-temperature strength, leading to poor coil shape after hot rolling.

A non-oriented electrical steel sheet according to an embodiment of the present invention may further include the at least one of Mo: 0.001 to 0.1 wt%, B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

### Mo: 0.001 to 0.100 wt%

When molybdenum (Mo) is excessively added, segregation of the segregation elements may be suppressed, thereby causing the effect of improving the texture to decrease. Therefore, Mo may be included in an amount of 0.1 wt% or less. Its lower limit is not particularly limited, but may 0.001 wt% or more include since it serves to improve the texture by segregating at surfaces and grain boundaries. More specifically, Mo may be included in an amount of 0.001 to 0.050 wt%. More specifically, Mo may be included in an amount of 0.005 to 0.030 wt%.

### B: 0.0050 wt% or less

When boron (B) is excessively added, deterioration of magnetism may be caused through formation of inclusions in the steel, or the like. Therefore, B may be included in an amount of 0.005 wt% or less. Its lower limit is not particularly limited, but may be set to 0.0001 wt% due to steelmaking costs. In more detail, B may be contained in an amount of 0.0001 to 0.0030 wt%.

### V: 0.0050 wt% or less

Vanadium (V) has a strong tendency to form precipitates inside the steel, and forms fine carbides or nitrides within the base material, which suppresses grain growth and domain wall movement, thereby deteriorating iron loss. Therefore, V content may be each 0.0050 wt% or less. Its lower limit is not particularly limited, but may be set to 0.0003 wt% due to steelmaking costs. That is, V may be included in an amount of 0.0003 to 0.0050 wt%. More specifically, V may be included in an amount of 0.0003 to 0.0030 wt%.

### Ca: 0.0050 wt% or less

Calcium (Ca) has a strong tendency to form precipitates inside the steel, and forms fine sulfides within the base material, which suppresses grain growth and domain wall movement, thereby deteriorating iron loss.

### Nb: 0.0050 wt% or less

Niobium (Nb) has a strong tendency to form precipitates inside the steel, and forms fine carbides or nitrides within the base material, which suppresses grain growth and domain wall movement, thereby deteriorating iron loss. Therefore, Nb content may be 0.0050 wt% or less. Its lower limit is not particularly limited, but may be set to 0.0003 wt% due to steelmaking costs. That is, Nb may be included in an amount of 0.0003 to 0.0050 wt%. More specifically, Nb may be included in an amount of 0.0003 to 0.0030 wt%.

### Zr: 0.0050 wt% or less

When zirconium (Zr) is excessively added, deterioration of magnetism may be caused through formation of inclusions in the steel, or the like. Therefore, Zr may be included in an amount of 0.005 wt% or less. Its lower limit is not particularly limited, but may be set to 0.0001 wt% due to steelmaking costs. That is, Zr may be included in an amount of 0.0001 to 0.0050 wt%. More specifically, it may be contained in an amount of 0.0005 to 0.0030 wt%.

### Te: 0.0100 wt% or less

Tellurium (Te) diffuses into the oxide layer on the surface of a hot-rolled coil, increases the coefficient of friction between the oxide layer and the rolling work roll, and improves hardness by concentrating under the oxide layer, so that it may be added to prevent the oxide layer that is broken during rolling from being pressed into the base metal and to be removed. If the added amount of Te is excessively small, the effect may be insignificant. If too much Te is added, the oxide layer is easily removed, causing the base material to come into direct contact with the work roll, thereby reducing the above effect, and excessive deformation bands may be generated within the steel sheet during cold rolling, which may lead to the development of {111}//ND texture, which is unfavorable for magnetism. More specifically, tellurium may be included in an amount of 0.0001 to 0.007 wt%.

### Mg: 0.0050 wt% or less

Magnesium (Mg) is an element that mainly combines with sulfur to form sulfides, and may affect the surface oxide layer on iron. Therefore, Mg may be or less included in an amount of 0.0050 wt%. Its lower limit is not particularly limited, but may be set to 0.0001 wt% due to steelmaking costs. That is, Mg may be included in an amount of 0.0001 to 0.0050 wt%. More specifically, it may be included in an amount of 0.0005 to 0.0030 wt%.

The balance includes Fe and inevitable impurities. The inevitable impurities are impurities mixed in the steel-making and the manufacturing process of the non-oriented electrical steel sheet, which are widely known in the field, and thus a detailed description thereof will be omitted. In the embodiment of the present invention, the addition of elements other than the above-described alloy compositions is not excluded, and various elements may be included within a range that does not hinder the technical concept of the present invention. When the additional elements are further included, they replace the balance of Fe.

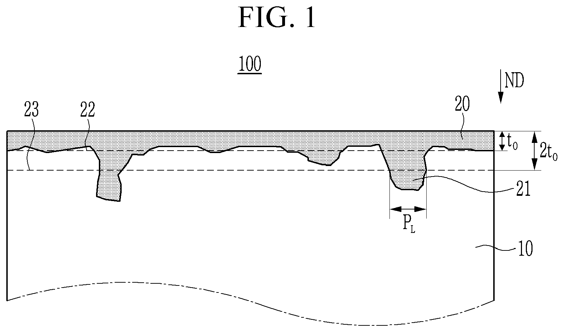

FIG. 1 schematically represents a cross-section of a non-oriented electrical steel sheet 100 according to an exemplary embodiment of the present disclosure of the present invention.

As appears in FIG. 1, the non-oriented electrical steel sheet 100 according to an embodiment of the present invention may include an oxide layer 20 and a steel sheet base material 10 that exists in an inward direction from the surface. In an embodiment of the present invention, the oxide layer 20 means a layer formed on a surface of the base material composed of an oxide in which Al, Si, and the like are combined with oxygen. When a cross-section including a thickness direction (a ND direction) of the steel sheet is observed by TEM, it forms an interface with the base material, and is distinguished from the steel sheet base material 10 through component analysis. Although FIG. 1 illustrates that the oxide layer 20 exists on an upper surface of the steel sheet, the oxide layer 20 may exist on both the upper surface and lower surface. In this case, the steel sheet base material 10 may exist between the upper surface the oxide layer 20 and lower surface the oxide layer 20. Since the oxide layer 20 exists to be thin compared to the entire thickness of the non-oriented electrical steel sheet 100, it does not affect the total alloy compositions of the entire non-oriented electrical steel sheet 100.

Although not shown in FIG. 1, there are cases where an insulating film exists on the surface of the non-oriented electrical steel sheet, and in this case, the insulating film and the oxide layer 20 can be distinguished through SEM and TEM, and distinguished through checking the components of the insulating film during component analysis.

As represented in FIG. 1, the oxide layer 20 may be formed with a certain roughness with respect to the steel sheet base material 10, and occasionally, a protruding portion 21 in which the oxide layer 20 invades the steel sheet base material 10 may exist. In an embodiment of the present invention, the protruding portion 21 means a portion that protrudes more than a thickness T_{O} of the oxide layer 20 in the inward direction (ND direction) of the steel sheet than an imaginary boundary line 22 of the oxide layer 20 and the steel sheet base material 10. The imaginary boundary line 22 may be determined as an interface when the oxide layer is formed with a completely uniform thickness by using an average thickness of the oxide layer. The thickness T_{O} of the oxide layer 20 may be obtained as the average thickness of the oxide layer.

In an embodiment of the present invention, the protruding portion 21 may be formed to satisfy Equation 1. [Equation 1] 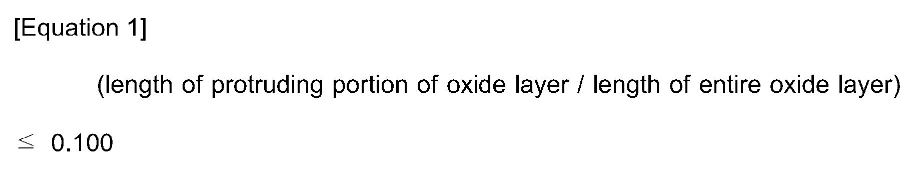 (length of protruding portion of oxide layer / length of entire oxide layer) ≤ 0.100

A length P_{L} of a protruding portion of the oxide layer 20 means a length, occupied by the protruding portion 21, of a parallelly moved line 23 that has parallelly moved as much as the thickness T_{O} of the oxide layer 20 in the inward direction (ND direction) of the steel sheet from the imaginary boundary line 22. When there are a plurality of protruding portions 21, it may be a sum of the lengths P_{L} of all protruding portions 21 of the oxide layer 20.

The length of the entire oxide layer means the length of the oxide layer 20 in a direction perpendicular to the thickness direction in a cross-section of the steel sheet including the thickness direction. That is, it means an entire horizontal length in a cross-section that is an object of measurement.

When Equation 1 exceeds 0.100, it means that the length of protruding portion of oxide layer P_{L} is relatively long, and in this case, it interfere the movement of magnetic domain during the process of magnetization, thereby deteriorating the magnetism. More specifically, the value of Equation 1 may be 0.030 to 0.095.

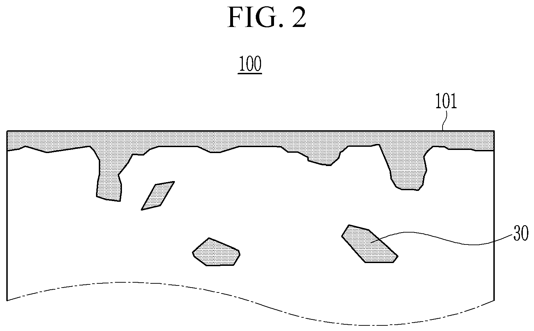

As shown in FIG. 2, in an embodiment of the present invention, an oxide 30 may exist in the steel sheet base material 10. The oxide 30 exists separately from the oxide layer 20, and is distinguished from the protruding portion 21 connected to the oxide layer 20. The oxide layer 20, the protruding portion 21, and the oxide 30 may mean a portion formed as Si, Al, or the like, is coupled to oxygen, and during component analysis by observing a cross-section including the thickness direction (ND direction) of the steel sheet by TEM, SEM, or the like, is distinguished from the steel sheet base material 10 through the O component. An area of the oxide 30 may be obtained by utilizing a commercial image analysis tool by using the SEM and TEM image. When the image analysis tool is not used, it may be manually calculated as an area of a spherical or rectangular shape depending on the shape, by taking an average of a longest length and a shortest length of the internal oxides as an average length. However, there may be differences from the exact calculated values, so image analysis tools can be used.

When measuring, rather than obtaining the area based on only one image, the area is measured after observing that a length direction of the oxide layer that appears in at least multiple images is at least 10 µm or more. Magnification and resolution are appropriate as long as internal oxides are observed. Specifically, it can be measured at a magnification of 20,000 or more.

A non-oriented electrical steel sheet according to an embodiment of the present invention may satisfy Equation 2 below. [Equation 2] $\left(area of internal oxide/area of entire oxide layer\right) \leq 0.050$

Here, in Equation 2, the area of the internal oxide means a sum of areas of oxides existing in the steel sheet base material.

In an embodiment of the present invention, when the oxide 30 is generated in a large amount compared to the oxide layer 20 or when the oxide layer 20 is formed to be thick, it may interfere the movement of magnetic domain during the process of magnetization, thereby deteriorating the magnetism. More specifically, Equation 2 value may be 0.015 to 0.049.

The oxide 30 may be mainly generated on a surface of the non-oriented electrical steel sheet 100, and in an embodiment of the present invention, for convenience of measurement, only the oxide 30 of 2% of the entire thickness from the surface of the steel sheet is included in the calculation of Equation 2.

A non-oriented electrical steel sheet according to an embodiment of the present invention may have an average grain diameter of 50 to 150 µm. If the crystal grains are excessively small, the hysteresis loss may increase. When the crystal grain is excessively large, the eddy current loss increases, causing deterioration of iron loss. The number of grains can be measured in a cross-section including the thickness direction, and after obtaining the average area of grains by dividing the number of grains by the entire area, particle diameter of the grains may be obtained through this. The particle diameter of the crystal grain may be obtained as a diameter of an imaginary circle having the same area. More specifically, the average grain diameter may be 60 to 130 µm.

As described above, in an embodiment of the present invention, the steel composition and appropriate the oxide layer 20 may be formed, to improve the strength and magnetism at the same time. Specifically, the non-oriented electrical steel sheet according to the embodiment of the present invention may have a core loss (W_{10/400}) of 12.0 W/kg or less and a magnetic flux density (B50) of 1.60 T or more. The thickness standard may be 0.20 mm. More specifically, iron loss (W10/400) may be 8.50 to 10.50W/kg. The magnetic flux density (B50) may be 1.61 to 1.70 T.

The iron loss (W10/400) is iron loss when a magnetic flux density of 1.0 T is induced at a frequency of 400 Hz. The magnetic flux density (B50) refers to the magnetic flux density induced in a magnetic field of 5000 A/m. The iron loss (10/400) and the magnetic flux density (B50) may be measured as an average value of measurements using a single sheet tester with respect to the rolling direction and the direction vertical to the rolling direction.

In addition, an embodiment of the present invention also has an excellent mechanical strength. More specifically, the yield strength may be 480 MPa or more. More specifically, the yield strength may be 500 to 650 MPa. The yield strength may be measured by 0.2% off-set conditions during a tensile test.

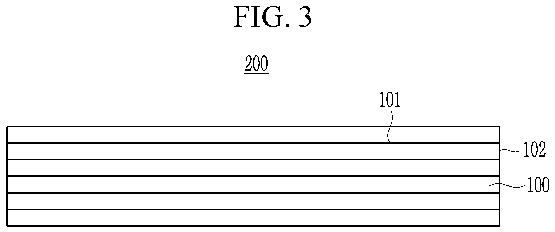

FIG. 3 schematically represents a cross-section of a motor core 200 according to an embodiment of the present invention. As appears in FIG. 3, the motor core 200 according to an embodiment of the present invention may be one formed stacking the non-oriented electrical steel sheet 100 described above in a plural quantity. Although not represented in FIG. 3, an insulating film may be interposed between the non-oriented electrical steel sheets 100.

The motor core 200 according to an embodiment of the present invention includes Si: 3.2 to 4.5%, Al: 1.2 to 2.5%, and Mn: 0.1 to 2.5%, in wt%, with the balance being Fe and unavoidable impurities, and a surface 101 of each sheet forming the motor core 200 satisfies Equation 1 below, and a side surface 102 of each sheet may satisfies Equation 5 below. [Equation 1] 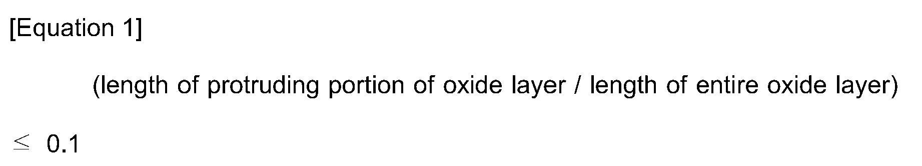 (length of protruding portion of oxide layer / length of entire oxide layer) ≤ 0.1 [Equation 5] 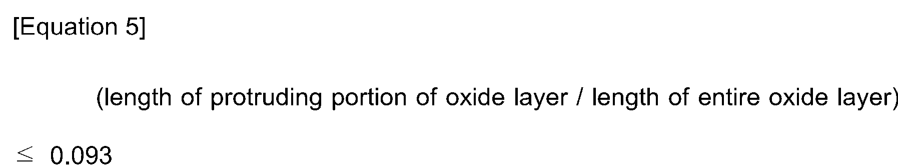 (length of protruding portion of oxide layer / length of entire oxide layer) ≤ 0.093

The steel component of the non-oriented electrical steel sheet 100 in the motor core 200 the same as the non-oriented electrical steel sheet 100 described above, and so redundant descriptions will be omitted. In the manufacturing process of the motor core 200, the steel component does not substantially change.

In addition, characteristics of the oxide layer 20, the protruding portion 21, and the oxide 30 represented by Equation 1 and Equation 2 with respect to the surface 101 of each sheet of the non-oriented electrical steel sheet 100 within the motor core 200 are also the same as the non-oriented electrical steel sheet 100 described above.

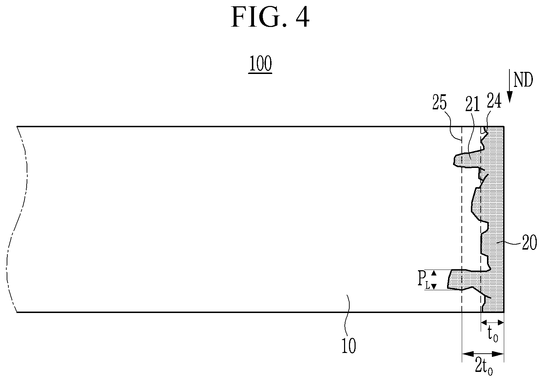

On the other hand, as appears in FIG. 4, the motor core 200 according to an embodiment of the present invention has characteristics of the oxide layer 20, the protruding portion 21, and the oxide 30, on the side surface 102 of each sheet of the non-oriented electrical steel sheet 100.

As appears in FIG. 4, each sheet of the non-oriented electrical steel sheet 100 in the motor core 200 according to an embodiment of the present invention may include the oxide layer 20 and the steel sheet base material 10 existing on the side surface 102 in the inward direction (direction vertical to ND). In an embodiment of the present invention, the oxide layer 20 may mean a layer portion formed as Si and Al is coupled to the oxygen, and when a cross-section including the thickness direction (ND direction) of the steel sheet is observed through SEM, TEM, or the like and component analysis is performed, is distinguished from the steel sheet base material 10 based on the component of oxygen. Although FIG. 4 illustrates that the oxide layer 20 exists on one side surface of the steel sheet, the oxide layer 20 may exist on both of the one side surface and the other side surface. In this case, the steel sheet base material 10 may exist between the oxide layer 20 of the one side surface and the oxide layer 20 of the other side surface. Since the oxide layer 20 exists to be thin compared to the entire thickness of the non-oriented electrical steel sheet 100, it does not affect the total alloy composition of the entire non-oriented electrical steel sheet 100.

As represented in FIG. 4, the oxide layer 20 may be formed with a certain roughness with respect to the steel sheet base material 10, and occasionally, a protruding portion 21 in which the oxide layer 20 invades the steel sheet base material 10 may exist. In an embodiment of the present invention, the protruding portion 21 means a portion that protrudes as much as the thickness T_{O} of the oxide layer 20 in the inward direction (direction vertical to ND) of the steel sheet than an imaginary boundary line 24 of the oxide layer 20 and the steel sheet base material 10. The imaginary boundary line 24 may be determined as an interface when the oxide layer is formed with a completely uniform thickness by using an average thickness of the oxide layer. The thickness T_{O} of the oxide layer 20 may be obtained as the average thickness of the oxide layer.

In an embodiment of the present invention, the protruding portion 21 may be formed to satisfy Equation 5. [Equation 5] 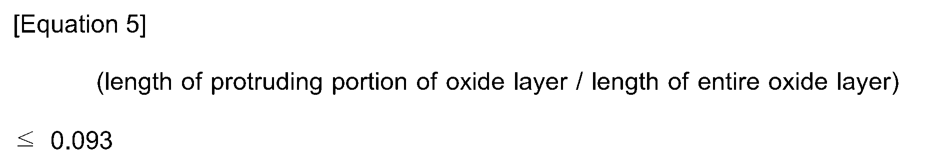 (length of protruding portion of oxide layer / length of entire oxide layer) ≤ 0.093

The length P_{L} of the protruding portion of the oxide layer 20 means a length, occupied by the protruding portion 21, of parallelly moved line 25 that has parallelly moved as much as the thickness T_{O} of the oxide layer 20 in the inward direction (ND direction) of the steel sheet from the imaginary boundary line 24. When there are a plurality of protruding portions 21, it may be a sum of the lengths P_{L} of all protruding portions 21 of the oxide layer 20.

The length of the entire oxide layer means the length of the oxide layer 20 in the thickness direction (ND direction) in a cross-section of the steel sheet including the thickness direction. That is, it means an entire vertical length in a cross-section that is an object of measurement.

When Equation 5 exceeds 0.093, it means that the length of protruding portion of oxide layer P_{L} is relatively long, and in this case, the magnetization process may be interfered, thereby deteriorating the magnetism. More specifically, Equation 5 value may be 0.050 to 0.093.

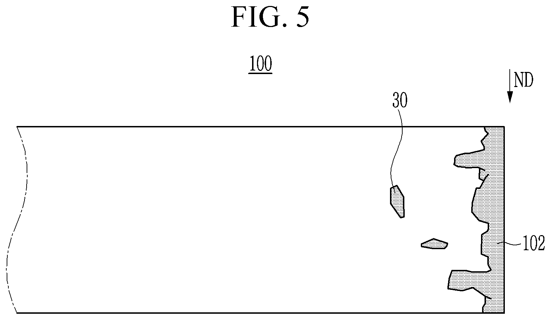

Although not shown in FIG. 4 and FIG. 5, as shown in FIG. 1, the oxide layer 20 may exist on the surface 101 of the steel sheet, and the oxide layer 20 existing on the surface 101 of the steel sheet is excluded in the length calculation of the protruding portion 21.

As shown in FIG. 5, in an embodiment of the present invention, the oxide 30 may exist in the steel sheet base material 10. The oxide 30 exists separately from the oxide layer 20, and is distinguished from the protruding portion 21 connected to the oxide layer 20. The protruding portion 21 and the oxide 30 may mean a portion formed as Si and Al are coupled to the oxygen, and when observing a cross-section including the thickness direction (ND direction) of the steel sheet through SEM, TEM, or the like and performing component analysis, they are distinguished from the steel sheet base material 10 by the component of oxygen.

A non-oriented electrical steel sheet according to an embodiment of the present invention may satisfy Equation 5 below. [Equation 6] $\left(area of internal oxide/area of entire oxide layer\right) \leq 0.047$

Here, in Equation 2 and Equation 5, the area of the internal oxide means a sum of areas of oxides existing in the steel sheet base material.

In an embodiment of the present invention, when the oxide 30 is generated in a large amount compared to the oxide layer 20 or when the oxide layer 20 is formed to be thick, the magnetization process may be interfered, thereby deteriorating the magnetism. More specifically, Equation 5 value may be 0.025 to 0.047.

The oxide 30 may be mainly generated on a side surface of the non-oriented electrical steel sheet 100, and in an embodiment of the present invention, for convenience of measurement, only the oxide 30 of 2% of the entire thickness from the side surface of the steel sheet is included in the calculation of Equation 5.

As described above, the non-oriented electrical steel sheet 100 existing inside the motor core 200 of an embodiment of the present invention may form a steel composition and an appropriate oxide layer 20, to improve the strength and magnetism at the same time. Specifically, the non-oriented electrical steel sheet according to the embodiment of the present invention may have a core loss (W10/400) of 12.0 W/kg or less and a magnetic flux density (B50) of 1.60 T or more. The thickness standard may be 0.20 mm. More specifically, iron loss (W10/400) may be 8.50 to 10.50W/kg. The magnetic flux density (B50) may be 1.61 to 1.70 T.

The iron loss (W10/400) is iron loss when a magnetic flux density of 1.0 T is induced at a frequency of 400 Hz. The magnetic flux density (B50) refers to the magnetic flux density induced in a magnetic field of 5000 A/m. By separating the non-oriented electrical steel sheet inside the motor core 200 into respective sheets, the iron loss (10/400) and the magnetic flux density (B50) may be measured as an average value of measurements using a single sheet tester with respect to the rolling direction and the direction vertical to the rolling direction.

In addition, the non-oriented electrical steel sheet 100 existing inside the motor core 200 of an embodiment also have an excellent mechanical strength. More specifically, the yield strength may be 480 MPa or more. More specifically, the yield strength may be 500 to 650 MPa. The yield strength may be measured by 0.2% off-set conditions during a tensile test.

A method for manufacturing a non-oriented electrical steel sheet according to an embodiment of the present invention includes the steps of, hot rolling a slab to produce a hot-rolled steel sheet, cold rolling the hot-rolled steel sheet to produce a cold-rolled sheet, and annealing the cold-rolled sheet.

Hereinafter, each step will be specifically described.

First, the slab is hot-rolled.

The alloy composition of the slab has been described in the alloy composition of the non-oriented electrical steel sheet described above, so redundant descriptions will be omitted. The alloy composition is not substantially changed in the manufacturing process of the non-oriented electrical steel sheet, and the alloy composition of the non-oriented electrical steel sheet and the slab is substantially the same.

Specifically, the slab may include Si: 3.2 to 4.5%, Al: 1.2 to 2.5%, and Mn: 0.1 to 2.5%, in wt%, with the balance being Fe and unavoidable impurities.

Other additional elements have been described in the alloy composition of the non-oriented electrical steel sheet, so redundant descriptions will be omitted.

The slab may be heated before hot-rolling. The heating temperature of the slab is not limited, but the slab may be heated at 1,200 °C or less. When the slab heating temperature is excessively high, precipitates such as AlN and MnS present in the slab are re-dissolved and then finely precipitated during hot-rolling and annealing, thereby inhibiting grain growth and reducing magnetism.

Subsequently, a hot-rolled sheet is manufactured by hot-rolling the slab.

A thickness of the hot-rolled sheet may be 1.0 to 4.5 mm. In the manufacturing of the hot-rolled sheet, a finish rolling temperature may be 800 °C or higher. Specifically, it may be 800 to 1,000 °C. The hot-rolled sheet may be wound at temperatures of 700 °C or less. More specifically, the thickness of the hot-rolled sheet may be 1.5 to 4.3mm.

After manufacturing the hot-rolled steel sheet, a step of annealing the hot-rolled sheet may be further included. At this time, the soaking temperature may be 850 to 1100 °C. If the annealing temperature is excessively low, the recrystallized structure is not formed or grows finely, so the effect of increasing the magnetic flux density is small, while if the annealing temperature is excessively high, the magnetic properties may deteriorate, and the rolling workability may deteriorate due to deformation of the sheet shape. More specifically, the temperature range may be 830 to 1080 °C. The soaking time may be 10 to 300 seconds. The annealing of the hot-rolled sheet may also be omitted.

Subsequently, a cold-rolled sheet may be manufactured by cold-rolling the hot-rolled steel sheet. In an embodiment of the present invention, the oxide layer generated on the surface of the non-oriented electrical steel sheet and the oxide within the steel sheet base material may be appropriately formed by adjusting the strain rate of each pass when manufacturing the cold-rolled sheet.

The process of manufacturing the cold-rolled sheet may include two or more passes, and a strain rate (έ1) in a first pass may be 200/s or less, and a sum (έ1+έ2) of the strain rates of the first pass and a second pass may be 1100/s or less.

The first pass is a 1^{st} pass of the cold rolling, and in an embodiment of the present invention, the number of times of the passes is based on the number of times of passing through the work roll. In an embodiment of the present invention, the strain rate can be calculated through the reduction amount, the rolling speed, and the rolling roll diameter for each pass.

When the strain rate (έ1) in the first pass is excessively large, the strain is non-uniformly applied to a surface of the base material, and the formation behavior of oxides becomes locally non-uniform during annealing of the cold-rolled sheet, so that protruding portions are formed in a large amount, which may adversely affect the magnetism of the steel sheet. More specifically, the strain rate (έ1) in the first pass may be 100 to 198/s.

The second pass is a 2^{nd} pass of cold rolling. When a sum (έ1+έ2) of the strain rates of the first pass and the second pass is excessively large, the strain is non-uniformly applied to a surface of the base material, and the formation behavior of oxides becomes locally non-uniform during annealing of the cold-rolled sheet, so that the internal oxides may be generated in a larger quantity compared to the oxide layer area, which may adversely affect the magnetism. More specifically, a sum (έ1+έ2) of the strain rates of the first pass and the second pass may be 850 to 1070/s.

In addition, in an embodiment of the present invention, a ratio of a strain rate (έtotal) of the entire process with respect to a strain rate (έmax) of a pass having a highest strain rate may be 0.3 or less. The strain rate (έtotal) of the entire process may be obtained by summing each strain rate in all passes within the process of manufacturing the cold-rolled sheet. When this ratio is excessively large, multiple oxides may be formed.

The total pass in the cold rolling may be 5 to 8.

The total reduction ratio of the cold rolling may be cold-rolled at a reduction ratio of 40 to 95%. If the reduction ratio is excessively low, the strain energy accumulated in the rolled steel sheet is small, making it difficult to recrystallize in the subsequent annealing process, so the rolled structure remains, which may cause problems in improving the magnetic flux density and iron loss. Conversely, if the reduction ratio is excessively high, the recrystallization of <111>//ND orientation grains may be promoted during the subsequent annealing process, and the grains may become finer, resulting in a lower magnetic flux density and an increase in iron loss. More specifically, the reduction ratio may be 60 to 85%. The the cold rolling may be performed using a tandem cold rolling mill that continuously cold rolls the steel sheet using a plurality of rolling stands, or a reverse rolling mill that discontinuously cold rolls the steel sheet using 12 or more rolling rolls. The final rolled thickness may be from 0.1 mm to 0.35 mm.

The step of manufacturing the cold-rolled sheet may be performed once or twice or more with intermediate annealing therebetween. Even if it is performed twice, the pass and strain rate may be calculated for the entire cold rolling process.

Subsequently, the cold-rolled sheet is annealed in the annealing of the cold-rolled sheet. In the process of annealing the cold-rolled sheet, the annealing temperature is not largely limited as long as it is a temperature that is generally applied to the non-oriented electrical steel sheet. The iron loss of the non-oriented electrical steel sheet is closely related to the grain size. The iron loss of the non-oriented electrical steel sheet may be divided into the hysteresis loss and the eddy current loss, and in this case, the hysteresis loss decreases as the grain size increases, while the eddy current loss increases as the grain size increases, and accordingly, there is an appropriate grain size that minimizes a sum of the hysteresis loss and the eddy current loss. Accordingly, it is important to derive and apply the annealing temperature that may secure an optimal grain size, and the annealing temperature is suitable when it is 850 to 1100 °C. When the annealing temperature is excessively low, the hysteresis loss increases because the grains are excessively fine, and when the annealing temperature is excessively high, the grains are excessively coarse and thus the eddy current loss increases, so that the iron loss is deteriorated. In addition, the annealing time is also appropriate if it is 10 to 300 seconds, and the annealing may be performed in a mixed atmosphere of hydrogen or argon and nitrogen to prevent magnetic deterioration due to the formation of an oxide layer.

In the cold-rolled sheet annealing process, the processed texture formed in the cold-rolling step may be entirely (that is, 99 % or more) recrystallized.

After annealing the cold-rolled sheet, an insulating film may be formed. The insulating film may be formed as an organic, inorganic, and organic/inorganic composite film, and it may be formed with other insulating coating materials.

A method of manufacturing a motor core according to an embodiment includes a step of stress-relieving annealing the non-oriented electrical steel sheet, and in the step of stress-relieving annealing, Equation 3 or Equation 4 below are satisfied. [Equation 3] $6 \leq \left[O\right] \times \left[Al\right] \leq 240$ [Equation 4] $480 \leq \left[O\right] \times \left[Al\right] \leq 2400$

Here, in Equation 3 and Equation 4, [O] represents the content (ppm) of O in the atmosphere in the stress-relieving annealing, and [Al] represents the content (wt%) of Al within non-oriented electrical steel sheet.

A non-oriented electrical steel sheet and a method of manufacturing the same has been described above, so redundant descriptions will be omitted. When manufacturing a motor core, processes of stamping, stacking, or the like, are performed, and in order to remove the stress occurring in the stamping process, a step of stress-relieving annealing is included.

While there may be a case where iron loss is deteriorated depending on the annealing atmosphere during the stress-relieving annealing, in particular, since Al of the base material strongly reacts with O to form an oxide layer on the surface, the O concentration of the atmosphere needs to be appropriately controlled depending on the amount of Al, and in an embodiment of the present invention, the content of O in the atmosphere may be adjusted to satisfy Equation 3 or Equation 4.

When Equation 3 and Equation 4 are not satisfied, that is, when the value of [O] × [Al] is below 6 or greater than 240 and below 480, the formation of oxide layers may be insufficient or excessive, resulting in poor contact between coating and the base material. In addition, when it exceeds 2400, rust may occur after annealing due to excessive oxidation. In this way, by adjusting the annealing atmosphere during stress-relieving annealing, the side surface of each sheet may satisfy Equation 5 or Equation 5. [Equation 5] 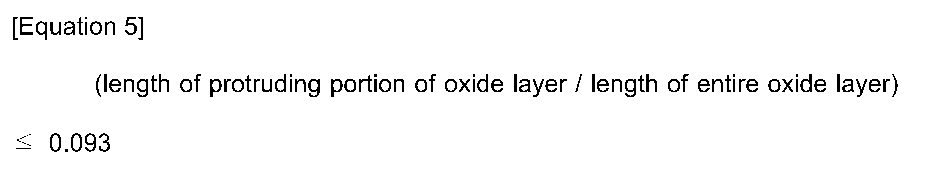 (length of protruding portion of oxide layer / length of entire oxide layer) ≤ 0.093 [Equation 6] $\left(area of internal oxide/area of entire oxide layer\right) \leq 0.047$

Here, in Equation 5, the area of the internal oxide means a sum of areas of oxides existing in the steel sheet base material.

Since the steel sheets are laminated with each other, the surface of each sheet is virtually unaffected by the stress-relieving annealing atmosphere, and satisfies Equation 1 or Equation 2 as is.

The remaining atmosphere other than oxygen may be nitrogen, and or a conventional atmosphere gas such as LNG and air.

The stress-relieving annealing may perform soaking at a temperature of 700 to 850 °C for 1 hour or more. Through this, the magnetism may be more improved. More specifically, it may be soaked at a soaking temperature of 720 to 800 °C for 1.5 to 4 hours.

Hereinafter, the present invention will be described in further detail through Examples. However, the examples are only for illustrating the present invention, and the present invention is not limited thereto.

### Example 1

The slab was manufactured with components including Table 1, Table 2, with the balance being Fe and unavoidable impurities, in wt%. This was heated to 1160 °C, hot-rolled to a thickness of 2.2 mm, and then coiled at 700 °C. The hot-rolled steel sheet was annealed at 1000 °C for 50 seconds. After the annealing of the hot-rolled sheet, the pickled specimen was cold-rolled to a thickness of 0.2 mm, and the strain rate of each pass during cold rolling was adjusted as shown in Table 3. Thereafter, annealing of the cold-rolled sheet was performed. At this time, the annealing of the cold-rolled sheet was performed at 1000 °C for 50 seconds.

The resistivity at 25°C was measured by using the 4-point method.

The yield strength was measured by 0.2% off-set conditions during a tensile testing.

The iron loss (W10/400) and the magnetic flux density (B50) were measured with respect to the rolling direction and the direction vertical to the rolling direction by using a single sheet tester by cutting 60 mm width × 60 mm length × 5 sheets for each specimen, and then the average values are represented.

The oxide layer and oxides were measured based on the component of oxygen by using Auto-SEM and GDS.

**[Table 1]**

| Steel type | C | Si | Mn | P | S | Al | Ti |
|---|---|---|---|---|---|---|---|
| A1 | 0.0030 | 3.21 | 1.80 | 0.015 | 0.0014 | 2.29 | 0.0027 |
| A2 | 0.0014 | 3.36 | 0.71 | 0.008 | 0.0035 | 2.22 | 0.0042 |
| A3 | 0.0030 | 3.35 | 0.98 | 0.004 | 0.0018 | 1.23 | 0.0042 |
| A4 | 0.0020 | 3.70 | 0.96 | 0.014 | 0.0027 | 2.12 | 0.0020 |
| A5 | 0.0022 | 3.22 | 1.25 | 0.002 | 0.0025 | 1.55 | 0.0045 |
| A6 | 0.0011 | 3.35 | 0.92 | 0.012 | 0.0033 | 1.44 | 0.0011 |
| A7 | 0.0045 | 3.74 | 0.76 | 0.009 | 0.0041 | 1.28 | 0.0023 |
| A8 | 0.0031 | 4.12 | 0.59 | 0.012 | 0.0033 | 1.50 | 0.0043 |
| A9 | 0.0019 | 2.84 | 0.59 | 0.005 | 0.0038 | 1.22 | 0.0019 |
| A10 | 0.0013 | 3.26 | 0.85 | 0.007 | 0.0042 | 1.38 | 0.0029 |
| A11 | 0.0037 | 3.47 | 0.65 | 0.009 | 0.0018 | 2.27 | 0.0011 |
| A12 | 0.0034 | 3.10 | 1.17 | 0.009 | 0.0026 | 2.27 | 0.0021 |
| A13 | 0.0038 | 2.91 | 1.72 | 0.005 | 0.0011 | 1.25 | 0.0017 |
| A14 | 0.0023 | 4.02 | 1.47 | 0.008 | 0.0021 | 2.24 | 0.0035 |
| A15 | 0.0044 | 3.11 | 0.31 | 0.008 | 0.0026 | 1.49 | 0.0040 |
| A16 | 0.0010 | 2.79 | 0.21 | 0.012 | 0.0034 | 1.87 | 0.0015 |

**[Table 2]**

| Steel type | N | Others | Resistivity ( µ Ω cm) | έ1 (1/s) | έ1+ έ2 (1/s) | έmax/έtotal |
|---|---|---|---|---|---|---|
| A1 | 0.0016 | Sn: 0.15 | 85.6 | 173 | 910 | 0.23 |
| A2 | 0.0020 | Sb: 0.12 | 80.3 | 130 | 892 | 0.22 |
| A3 | 0.0034 | Ni: 0.03 | 70.5 | 167 | 995 | 0.29 |
| A4 | 0.0024 | - | 84.4 | 127 | 827 | 0.22 |
| A5 | 0.0016 | Cr: 0.02 | 74.5 | 136 | 948 | 0.27 |
| A6 | 0.0023 | - | 72.6 | 155 | 1063 | 0.22 |
| A7 | 0.0034 | Mo: 0.03 | 74.3 | 139 | 745 | 0.22 |
| A8 | 0.0022 | - | 80.1 | 168 | 882 | 0.22 |
| A9 | 0.0015 | Cu 0.04 | 62.5 | 233 | 940 | 0.21 |
| A10 | 0.0027 | - | 70.5 | 266 | 937 | 0.24 |
| A11 | 0.0041 | - | 81.8 | 181 | 1133 | 0.29 |
| A12 | 0.0017 | - | 80.5 | 136 | 1061 | 0.40 |
| A13 | 0.0012 | - | 70.0 | 227 | 1193 | 0.27 |
| A14 | 0.0045 | - | 92.3 | 159 | 1394 | 0.43 |
| A15 | 0.0016 | - | 67.0 | 280 | 1036 | 0.35 |
| A16 | 0.0010 | - | 67.1 | 210 | 1151 | 0.37 |

**[Table 3]**

| Steel type | Equation 1 | Equation 2 | Yield strength (Mpa) | W10/400 (W/Kg) | B50 (T) | Classification |
|---|---|---|---|---|---|---|
| A1 | 0.053 | 0.046 | 521 | 8.92 | 1.62 | Inventive Example |
| A2 | 0.057 | 0.025 | 529 | 8.81 | 1.63 | Inventive Example |
| A3 | 0.052 | 0.022 | 531 | 9.67 | 1.62 | Inventive Example |
| A4 | 0.093 | 0.024 | 556 | 9.28 | 1.62 | Inventive Example |
| A5 | 0.035 | 0.042 | 529 | 9.55 | 1.63 | Inventive Example |
| A6 | 0.052 | 0.044 | 513 | 9.30 | 1.64 | Inventive Example |
| A7 | 0.085 | 0.025 | 505 | 9.52 | 1.62 | Inventive Example |
| A8 | 0.043 | 0.046 | 537 | 9.80 | 1.63 | Inventive Example |
| A9 | 0.112 | 0.049 | 461 | 11.23 | 1.57 | Comparative Example |
| A10 | 0.157 | 0.076 | 529 | 10.59 | 1.58 | Comparative Example |
| A11 | 0.085 | 0.065 | 617 | 11.26 | 1.56 | Comparative Example |
| A12 | 0.162 | 0.035 | 574 | 11.76 | 1.58 | Comparative Example |
| A13 | 0.094 | 0.085 | 483 | 12.13 | 1.57 | Comparative Example |
| A14 | 0.135 | 0.070 | 694 | 11.23 | 1.59 | Comparative Example |
| A15 | 0.148 | 0.061 | 512 | 10.33 | 1.59 | Comparative Example |
| A16 | 0.147 | 0.074 | 496 | 11.68 | 1.58 | Comparative Example |

As appears in Table 1 to Table 3, it may be confirmed that steel types A1 to A8 in which the oxide layer and oxides are appropriately formed due to appropriate adjusting of the cold rolling conditions exhibit excellent iron loss, magnetic flux density, and yield strength, at the same time.

On the other hand, it may be confirmed that A9 to A16 exhibit poor magnetism or strength, since the cold rolling conditions was not appropriately adjusted, and the oxide layer and oxide were not appropriately formed.

### Example 2

A slab was manufactured with components including Table 4, Table 5, with the balance being Fe and unavoidable impurities, in wt%. This was heated to 1140 °C, hot-rolled to a thickness of 2.1 mm, and then coiled at 710 °C. The hot-rolled steel sheet was annealed at 1000 °C for 60 seconds. After the annealing of the hot-rolled sheet, the pickled specimen was cold-rolled to a thickness of 0.2 mm, and the strain rate of each pass during cold rolling was adjusted as shown in Table 3. Thereafter, annealing of the cold-rolled sheet was performed. At this time, the annealing of the cold-rolled sheet was performed at 1000 °C for 60 seconds.

The steel sheet undergone the annealing of the cold-rolled sheet was annealed at 740 °C for 2 hours in an atmosphere with an oxygen content listed in Table 5 (the remainder being nitrogen), simulating stress-relieving annealing. Table 6 summarizes the oxide layer and oxide properties on the side surface of each sheet, together with magnetism and strength with respect to each steel sheet after the stress-relieving annealing. At this time, the shape and distribution of the oxide layer and oxide were observed by using SEM, with respect to a thickness surface portion excluding the upper and lower 5%.

**[Table 4]**

| Steel type | C | Si | Mn | P | S | Al | Ti |
|---|---|---|---|---|---|---|---|
| B1 | 0.0028 | 3.30 | 1.17 | 0.012 | 0.0027 | 1.35 | 0.0020 |
| B2 | 0.0045 | 4.13 | 2.13 | 0.015 | 0.0016 | 1.46 | 0.0011 |
| B3 | 0.0032 | 3.72 | 1.91 | 0.014 | 0.0018 | 1.83 | 0.0045 |
| B4 | 0.0040 | 3.73 | 0.62 | 0.013 | 0.0044 | 2.24 | 0.0032 |
| B5 | 0.0014 | 3.36 | 1.59 | 0.007 | 0.0036 | 1.52 | 0.0016 |
| B6 | 0.0010 | 3.80 | 1.14 | 0.002 | 0.0019 | 2.26 | 0.0042 |
| B7 | 0.0026 | 3.22 | 1.33 | 0.005 | 0.0041 | 2.29 | 0.0044 |
| B8 | 0.0031 | 4.10 | 1.91 | 0.010 | 0.0013 | 1.28 | 0.0019 |
| B9 | 0.0045 | 3.13 | 0.50 | 0.004 | 0.0018 | 1.30 | 0.0011 |
| B10 | 0.0040 | 2.84 | 2.13 | 0.006 | 0.0023 | 1.91 | 0.0035 |
| B11 | 0.0045 | 3.73 | 0.97 | 0.005 | 0.0012 | 2.16 | 0.0010 |
| B12 | 0.0039 | 3.83 | 2.16 | 0.008 | 0.0022 | 1.35 | 0.0015 |
| B13 | 0.0014 | 3.62 | 2.11 | 0.009 | 0.0026 | 2.05 | 0.0036 |
| B14 | 0.0032 | 3.17 | 1.88 | 0.012 | 0.0035 | 1.41 | 0.0020 |

**[Table 5]**

| Steel type | N | Others | Resistivity (µΩcm) | έ1 (1/s) | έ1+ έ2 (1/s) | έmax/έtotal | O(ppm) X Al(wt.%) |
|---|---|---|---|---|---|---|---|
| B1 | 0.0038 | Sn 0.11/Sb 0.03 | 72.4 | 155 | 1071 | 0.28 | 21.6 |
| B2 | 0.0035 | Sb 0.12 | 88.5 | 129 | 941 | 0.23 | 80.3 |
| B3 | 0.0033 | Cr 0.03 | 86.8 | 174 | 1038 | 0.20 | 173.9 |
| B4 | 0.0019 | Mo 0.04 | 84.2 | 175 | 778 | 0.26 | 1032.6 |
| B5 | 0.0031 | Ni 0.02/Cr 0.03 | 77.4 | 198 | 988 | 0.26 | 860.3 |
| B6 | 0.0044 | Cu 0.01 | 88.2 | 142 | 855 | 0.28 | 1787.7 |
| B7 | 0.0041 | Ni 0.01/Cu 0.03 | 83.0 | 131 | 1083 | 0.29 | 2152.6 |
| B8 | 0.0014 | - | 84.8 | 123 | 951 | 0.23 | 371.0 |
| B9 | 0.0013 | - | 66.1 | 192 | 898 | 0.29 | 5.0 |
| B10 | 0.0016 | - | 79.0 | 177 | 1063 | 0.24 | 2582.0 |
| B11 | 0.0036 | - | 85.3 | 285 | 1045 | 0.29 | 372.0 |
| B12 | 0.0027 | - | 84.0 | 159 | 1182 | 0.25 | 350.0 |
| B13 | 0.0035 | - | 89.2 | 329 | 1247 | 0.27 | 2569.0 |
| B14 | 0.0028 | - | 75.6 | 222 | 1285 | 0.32 | 4.0 |

**[Table 6]**

| Steel type | Equation 1 | Equation 2 | Equation 5 | Equation 5 | Yield strength (Mpa) | W10/400 (W/Kg) | B50 (T) | Classification |
|---|---|---|---|---|---|---|---|---|
| B1 | 0.075 | 0.039 | 0.076 | 0.042 | 545 | 9.03 | 1.64 | Inventive Example |
| B2 | 0.088 | 0.030 | 0.062 | 0.045 | 564 | 8.83 | 1.63 | Inventive Example |
| B3 | 0.058 | 0.019 | 0.081 | 0.037 | 631 | 8.86 | 1.63 | Inventive Example |
| B4 | 0.084 | 0.031 | 0.087 | 0.027 | 548 | 8.84 | 1.64 | Inventive Example |
| B5 | 0.068 | 0.028 | 0.075 | 0.038 | 559 | 9.13 | 1.64 | Inventive Example |
| B6 | 0.091 | 0.042 | 0.093 | 0.047 | 564 | 8.89 | 1.63 | Inventive Example |
| B7 | 0.045 | 0.047 | 0.072 | 0.041 | 579 | 9.09 | 1.63 | Inventive Example |
| B8 | 0.108 | 0.076 | 0.123 | 0.043 | 642 | 10.71 | 1.58 | Comparative Example |
| B9 | 0.075 | 0.060 | 0.082 | 0.057 | 524 | 11.59 | 1.59 | Comparative Example |
| B10 | 0.113 | 0.087 | 0.077 | 0.078 | 524 | 10.65 | 1.58 | Comparative Example |
| B11 | 0.175 | 0.074 | 0.112 | 0.043 | 646 | 12.00 | 1.56 | Comparative Example |
| B12 | 0.150 | 0.040 | 0.124 | 0.066 | 614 | 12.48 | 1.56 | Comparative Example |
| B13 | 0.169 | 0.084 | 0.156 | 0.065 | 635 | 12.83 | 1.57 | Comparative Example |
| B14 | 0.184 | 0.140 | 0.176 | 0.141 | 530 | 12.95 | 1.56 | Comparative Example |

As appears in Table 4 to Table 6, it may be confirmed that steel types B1 to B7 in which the oxide layer and oxides of the surface and side surface are appropriately formed as the cold rolling conditions is appropriately adjusted and the atmosphere conditions is appropriately adjusted during SRA exhibit excellent iron loss, magnetic flux density, and yield strength, at the same time.

On the other hand, it may be confirmed that B8 to B14 exhibit poor magnetism or strength, since the cold rolling conditions was not appropriately adjusted, or the atmosphere conditions is not appropriately adjusted during SRA, and the oxide layer and oxide of the surface and side surface were not appropriately formed.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

**<Description of symbols>**

| | | | |
|---|---|---|---|
| 100: | non-oriented electrical steel sheet | | |
| 10: | steel sheet base material | | |
| 20: | oxide layer | 21: | protruding portion, |
| 22: | imaginary boundary line | 23: | parallelly moved line, |
| 24: | imaginary boundary line on lateral side | | |
| 25: | parallelly moved line on lateral side | | |
| 30: | oxide | 101: | surface of steel sheet |
| 102: | steel sheet side surface | 200: | motor core |

## Claims

1. A non-oriented electrical steel sheet, comprising, in wt%, Si: 3.2 to 4.5%, Al: 1.2 to 2.5%, and Mn: 0.1 to 2.5%, with the balance being Fe and unavoidable impurities, wherein Equation 1 below is satisfied, [Equation 1] 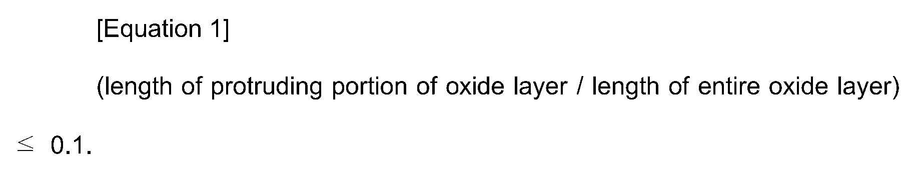 (length of protruding portion of oxide layer / length of entire oxide layer) ≤ 0.1.

2. The non-oriented electrical steel sheet of claim 1, wherein Equation 2 below is satisfied, [Equation 2] $\left(area of internal oxide/area of entire oxide layer\right) \leq 0.05 ;$ wherein, in Equation 2, the area of the internal oxide means a sum of areas of oxides existing in a steel sheet base material.

3. The non-oriented electrical steel sheet of claim 1, comprising Mn: 0.7 to 2.5 wt%.

4. The non-oriented electrical steel sheet of claim 1, further comprising at least one of P:0.1 wt% or less (excluding 0%), C:0.005 wt% or less (excluding 0%), S:0.005 wt% or less (excluding 0%), Ti:0.005 wt% or less (excluding 0%), and N:0.005 wt% or less (excluding 0%).

5. The non-oriented electrical steel sheet of claim 1, further comprising 0.005 to 0.200 wt% of each or a combined amount of one or more of Sn, Sb, Bi, Pb, Ge, and As.

6. The non-oriented electrical steel sheet of claim 1, further comprising at least one of Cu: 0.005 to 0.2 wt%, Cr: 0.01 to 0.5 wt%, Ni:0.005 to 0.1 wt%, Zn:0.01 wt% or less (excluding 0%), and Co: 0.05 wt% or less (excluding 0%).

7. The non-oriented electrical steel sheet of claim 1, further comprising at least one of Mo: 0.001 to 0.1 wt%, B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

8. The non-oriented electrical steel sheet of claim 1, wherein an average grain diameter is 50 to 150 µm, and a yield strength is 480 MPa or more.

9. The non-oriented electrical steel sheet of claim 1, wherein iron loss (W10/400) is 12.0 W/Kg or less, and a magnetic flux density (B50) is 1.60T or more.

10. A motor core, in which a plurality of non-oriented electrical steel sheets each comprising, in wt%, Si: 3.2 to 4.5%, Al: 1.2 to 2.5%, and Mn: 0.1 to 2.5%, with the balance being Fe and unavoidable impurities, and satisfying Equation 1 below, are stacked, [Equation 1] 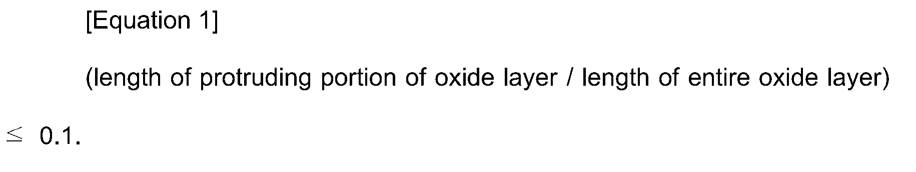 (length of protruding portion of oxide layer / length of entire oxide layer) ≤ 0.1.

11. A method of manufacturing a non-oriented electrical steel sheet, the method comprising:
manufacturing a hot-rolled steel sheet by hot-rolling a slab comprising, in wt%, Si: 3.2 to 4.5%, Al: 1.2 to 2.5%, and Mn: 0.1 to 2.5%, with the balance being Fe and unavoidable impurities;
manufacturing a cold-rolled sheet by cold-rolling the hot-rolled steel sheet; and
cold-rolled sheet annealing for annealing the cold-rolled sheet,
wherein the manufacturing of the cold-rolled sheet comprises two or more passes, and
wherein a strain rate (έ1) in a first pass is 200/s or less, and a sum (έ1+έ2) of strain rates in the first pass and a second pass is 1100/s or less.

12. The method of claim 11, wherein, in the manufacture of the cold-rolled sheet, a ratio of a strain rate (έmax) of a pass having a highest strain rate with respect to a strain rate (έtotal) of an entire process is 0.3 or less.

13. The method of claim 11, wherein the slab further comprises at least one of P:0.1 wt% or less (excluding 0%), C:0.005 wt% or less (excluding 0%), S:0.005 wt% or less (excluding 0%), Ti:0.005 wt% or less (excluding 0%), N:0.005 wt% or less (excluding 0%).

14. The method of claim 11, wherein the slab further comprises 0.005 to 0.200 wt% of each or a combined amount of one or more of Sn, Sb, Bi, Pb, Ge, and As.

15. The method of claim 11, wherein the slab further comprises at least one of Cu: 0.005 to 0.2 wt%, Cr: 0.01 to 0.5 wt%, Ni: 0.005 to 0.1 wt%, Zn:0.01 wt% or less (excluding 0%) and Co: 0.05 wt% or less (excluding 0%).

16. The method of claim 11, wherein the slab further comprises at least one of Mo: 0.001 to 0.1 wt%, B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

17. A method of manufacturing a motor core, the method comprising:
stress-relieving annealing the non-oriented electrical steel sheet of claim 1,
wherein Equation 3 or Equation 4 below are satisfied in the stress-relieving annealing, [Equation 3] $6 \leq \left[O\right] \times \left[Al\right] \leq 240 ,$ [Equation 4] $480 \leq \left[O\right] \times \left[Al\right] \leq 2400 , and$
wherein, in Equation 3 and Equation 4, [O] represents the content (ppm) of O in the atmosphere in the stress-relieving annealing, and [Al] represents the content (wt%) of Al within non-oriented electrical steel sheet.

18. The method of claim 17, wherein the stress-relieving annealing performs soaking at a temperature of 700 to 850 °C for 1 hour or more.

19. The motor core, comprising, in wt%, Si: 3.2 to 4.5%, Al: 1.2 to 2.5%, and Mn: 0.1 to 2.5%, with the balance being Fe and unavoidable impurities,
wherein a surface of each sheet forming a motor core satisfies Equation 1 below, and a side surface of each sheet satisfies Equation 5 below, [Equation 1] 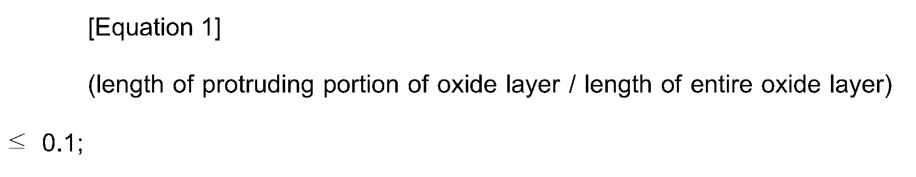 (length of protruding portion of oxide layer / length of entire oxide layer) ≤ 0.1; [Equation 5] 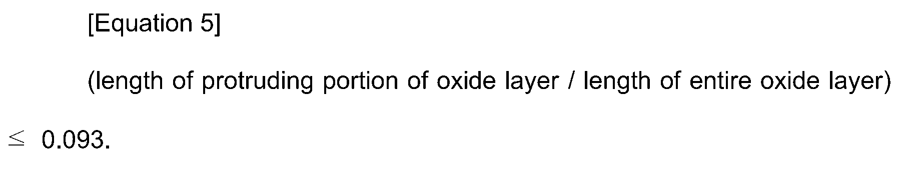 (length of protruding portion of oxide layer / length of entire oxide layer) ≤ 0.093.

20. The motor core of claim 19, wherein the surface of each sheet forming the motor core satisfies Equation 2 below, and the side surface of each sheet satisfies Equation 6 below, [Equation 2] $\left(area of internal oxide/area of entire oxide layer\right) \leq 0.05 ,$ [Equation 6] $\left(area of internal oxide/area of entire oxide layer\right) \leq 0.047 ,$ wherein, in Equation 2 and Equation 5, the area of the internal oxide means a sum of areas of oxides existing in a steel sheet base material.
